# FASCICULE DE BREVET EUROPEEN

(11) **EP 3 172 961 B1**
(45) Date de publication et mention de la délivrance du brevet: **14.11.2018**
(21) Numéro de dépôt: 16200057.4
(22) Date de dépôt: 22.11.2016
(51) Int. Cl.: A01G 13/02, A01G 9/14

(54) **ELÉMENT DE COUVERTURE AUTO-VENTILÉ POUR LA CULTURE VÉGÉTALE**
SELBSTBELÜFTENDES ABDECKUNGSELEMENT FÜR DEN PFLANZENANBAU
SELF-VENTING COVER ELEMENT FOR PLANT CULTURE

(30) Priorité: 25.11.2015 FR 1561384
(43) Date de publication de la demande: 31.05.2017
(73) Titulaire: Europlastic, 30470 Aimargues (FR)
(72) Inventeur: CALVET, Christophe, 30470 Aimargues (FR)
(74) Mandataire: IPAZ

(56) Documents cités:
- EP-A1- 0 080 961
- WO-A2-2012/011891
- FR-A1- 2 983 033

## Description

La présente invention concerne un élément de couverture souple, transparent ou non, coloré ou non, telle qu'une bâche, pour la culture végétale et en particulier pour la culture agricole, auto-ventilé. Elle concerne également un abri de culture muni d'au moins un tel élément de couverture souple.

Le domaine de l'invention est le domaine des éléments de couverture souple, utilisés pour couvrir une zone de culture végétale, voir par exemple EP 0 080 961 A1.

### Etat de la technique

Les éléments de couverture pour la culture végétale peuvent être disposés sur une ossature, pour constituer un abri de culture. Ils peuvent également être utilisés sans ossature aucune, en étant directement posés sur une zone de culture, souvent de forme bombée.

Généralement réalisés en plastique, transparent ou non, coloré ou non, les éléments de couverture ont pour fonctions d'une part de protéger la culture végétale contre les agressions extérieures, et d'autre part de procurer une température plus propice à la culture végétale, en particulier en hiver, en délimitant un volume de culture. Ainsi, la culture végétale est protégée des précipitations ou du gel.

Cependant, dès que l'ensoleillement augmente la température dans le volume de culture, peut atteindre un niveau non-désiré. Dans ce cas, il est nécessaire de réguler la température à l'intérieur du volume de culture, c'est-à-dire sous l'élément de couverture.

Une première solution consiste à utiliser des moyens de ventilation mécaniques, pour renouveler l'air se trouvant dans le volume de culture. Cette solution est onéreuse et encombrante.

Une deuxième solution consiste à pratiquer des ouvertures d'aération dans l'élément de couverture à l'aide d'un outil tranchant. Cette solution présente des risques de blessure pour l'opérateur, est couteuse en main d'oeuvre, chronophage. Surtout, elle modifie de manière définitive l'élément de couverture en cours d'utilisation, ne permettant pas de retour en arrière dans le cas où l'ensoleillement diminue, ou en vue d'une réutilisation future de l'élément de couverture pour une nouvelle culture.

Une troisième solution consiste à prévoir des prédécoupes sur l'élément de couverture, permettant de créer des ouvertures d'aération sans utilisation d'un outil tranchant, tel que décrit dans la demande publié sous le numéro FR 3 013 940 A1. Cette solution bien que moins dangereuse pour l'opérateur, reste couteuse en main d'oeuvre, chronophage et définitive sans possibilité de retour en arrière.

Un but de la présente invention est de remédier à ces inconvénients.

Un autre but de l'invention est de proposer un élément de couverture souple permettant une régulation de température à l'intérieur du volume de culture moins couteux.

Encore un autre but de l'invention est de proposer un élément de couverture souple permettant une régulation de température à l'intérieur du volume de culture moins chronophage.

Enfin, un autre but de l'invention est de proposer un élément de couverture souple permettant une régulation de température à l'intérieur du volume de culture, sans modification définitive dudit élément de couverture en cours d'utilisation.

### Exposé de l'invention

L'invention permet d'atteindre au moins l'un de ces buts par un élément de couverture souple, transparent ou opaque, coloré ou non, pour la culture végétale, prévu pour être posé au-dessus d'une zone de culture, avec ou sans utilisation d'une ossature, et créer un volume de culture, caractérisé en ce qu'il comprend au moins un compartiment, dit d'aération, formé entre :
- une couche, dite intérieure, se trouvant, en utilisation, du côté de ladite zone de culture, et comportant des ouvertures d'aération pour laisser passer de l'air entre le volume de culture et ledit compartiment d'aération, et
- une couche, dite extérieure, se trouvant, en utilisation, du côté opposé à ladite zone de culture, comportant des ouvertures d'aération pour laisser passer de l'air entre ledit compartiment d'aération et l'extérieur.

Autrement dit, l'élément de couverture selon l'invention comporte au moins une chambre à air, agissant comme un sas d'aération. En fonction des tailles relatives des ouvertures d'aération aménagées sur la couche extérieure et des ouvertures d'aération aménagées sur la couche intérieure, il est ainsi possible d'obtenir un compartiment d'aération qui peut être utilisé :
- soit pour évacuer l'air chaud depuis le volume de culture vers l'extérieur en cas de température élevée dans ledit volume de culture,
- soit pour faire entrer de l'air dans le volume de travail, tout en le réchauffant au passage du sas.
permettant ainsi une régulation automatisée et naturelle de la température, de l'humidité de l'air, plus généralement de la qualité de l'air, à l'intérieur du volume de culture.

Les ouvertures d'aération peuvent avantageusement être réalisées en usine, lors de la fabrication de l'élément de couverture. Ainsi, l'élément de couverture selon l'invention ne nécessite aucune utilisation d'un outil tranchant, ni aucune intervention d'un opérateur, sur le site d'utilisation pour la réalisation des ouvertures d'aération. Par conséquent, il permet une régulation de la température dans le volume de culture moins couteuse et moins chronophage.

De plus, l'élément de couverture selon l'invention, peut être réutilisé pour plusieurs cultures végétales dans le temps.

Dans la suite de la demande, « compartiment d'aération » désigne aussi bien un compartiment d'extraction d'air, en particulier d'air chaud, depuis le volume de culture vers l'extérieur, et un compartiment d'admission d'air, en particulier d'air frais, depuis l'extérieur dans le volume de culture.

De plus, les adjectifs « chaud » et « frais » sont utilisés de manière relative entre la température de l'air se trouvant dans le volume de culture et l'air extérieur. Plus particulièrement, l'air se trouvant dans le volume de culture est qualifié d'« air chaud » et l'air se trouvant à l'extérieur du volume de culture est qualifié d'« air frais ».

La couche intérieure et la couche extérieure sont, directement ou indirectement, fixées entre-elles.

L'élément de couverture selon l'invention peut être utilisé soit avec un abri de culture disposé atour/au-dessus de la zone de culture, soit sans abri de culture. Dans ce dernier cas, l'élément de couverture peut être disposé directement sur la zone de culture et le volume de culture est très faible.

Avantageusement, au moins un, en particulier chaque, compartiment d'aération peut être divisé en au moins deux cellules, dans une direction perpendiculaire aux bordures latérales dudit élément de couverture, en particulier dans le sens de la largeur dudit élément de couverture.

Une telle caractéristique permet de réaliser une régulation individualisée par zones, dans le sens de la largeur de l'élément de couverture, et ainsi d'adapter la régulation à chaque zone, par exemple en fonction de l'exposition de ladite zone ou en fonction de la culture se trouvant au niveau de ladite zone.

Avantageusement, au moins deux cellules adjacentes d'un compartiment d'aération, peuvent communiquer entre-elles, de sorte à homogénéiser/lisser la régulation au sein du volume de culture.

Alternativement au moins deux cellules adjacentes d'un compartiment d'aération peuvent ne pas être communicantes.

Les cellules peuvent être réalisées par collage de la couche extérieure avec la couche intérieure suivant une ligne de collage/soudage dans le sens de la longueur de l'élément de couverture.

Lorsque deux cellules adjacentes sont communicantes, la ligne de collage/soudage se trouvant entre lesdites cellules peut être discontinue, ou non aboutie au niveau d'au moins une extrémité de ladite ligne, créant ainsi une ouverture de communication entre lesdites cellules.

Lorsque deux cellules adjacentes sont non-communicantes, la ligne de collage/soudage se trouvant entre lesdites cellules peut être continue de sorte à créer une séparation étanche entre lesdites cellules.

De plus, au moins un compartiment d'aération peut être divisé en au moins deux sections, en particulier longitudinales, dans le sens de la longueur dudit élément de couverture.

Ainsi, il est possible de réaliser une régulation individualisée par section, dans le sens de la longueur de l'élément de couverture, et ainsi d'adapter la régulation à chaque section, par exemple en fonction de l'exposition de ladite section ou en fonction de la culture se trouvant au niveau de ladite section.

Au moins deux sections adjacentes peuvent être communicantes entre-elles, de sorte à lisser la régulation réalisée.

Alternativement, au moins deux sections adjacentes peuvent ne pas être communicantes.

Les sections peuvent être réalisées par collage de la couche extérieure avec la couche intérieure suivant une ligne de collage/soudage dans le sens de la largeur de l'élément de couverture.

Lorsque deux sections adjacentes sont communications, la ligne de collage/soudage se trouvant entre lesdites cellules peut être discontinue, ou non aboutie au niveau d'au moins une extrémité de ladite ligne, créant ainsi une ouverture de communication entre lesdites sections.

Lorsque deux sections adjacentes sont non-communicantes, la ligne de collage/soudage se trouvant entre lesdites sections peut être continue de sorte à créer une séparation étanche entre lesdites sections.

Suivant un premier mode de réalisation particulièrement avantageux, l'élément de couverture selon l'invention peut comprendre au moins un compartiment d'aération, dit compartiment d'évacuation, pour évacuer de l'air chaud du volume de culture vers l'extérieur.

Dans ce cas, l'au moins une ouverture d'aération, dite soupape d'évacuation, de la couche intérieure formant ledit compartiment d'évacuation est plus grande que l'au moins une ouverture d'aération, dite orifice d'évacuation, de la couche extérieure formant ledit comportement d'évacuation.

Autrement dit, le compartiment d'évacuation comporte des ouvertures d'évacuation, appelées soupapes d'évacuation, qui sont plus grandes du côté du volume de culture que les ouvertures d'évacuation, appelées orifices d'évacuation, se trouvant du côté extérieur.

Ainsi, l'air chaud se trouvant dans le volume de culture, passe dans le compartiment d'évacuation par les soupapes d'évacuation aménagées sur la couche intérieure dudit compartiment, puis sort dudit compartiment d'évacuation vers l'extérieur par les orifices d'évacuation aménagées sur la couche extérieure dudit compartiment. Les soupapes d'évacuation étant plus grandes que les orifices d'évacuation, l'air chaud entre plus facilement dans le compartiment d'évacuation qu'il n'est évacué vers l'extérieur. Cela a pour effet de gonfler le compartiment d'évacuation. Un tel gonflage permet d'augmenter l'isolation thermique de l'élément de couverture, à l'instar d'un double-vitrage.

De plus, le compartiment d'évacuation permet un renouvèlement d'air de sorte que l'humidité dans la zone de culture est régulée par la circulation d'air.

Dans une version préférée, le compartiment d'évacuation peut être positionné sur une partie centrale dudit élément de couverture, à distance des bordures latérales, de sorte à se trouver en utilisation, sur une partie haute de l'élément de couverture.

L'air chaud se dirigeant naturellement vers le haut, un positionnement du compartiment d'évacuation en partie haute permet une meilleure régulation, et en particulier une meilleure évacuation de l'air chaud.

En particulier, le compartiment d'évacuation peut être positionné centré, de sorte à être équidistant par rapport à chacune des bordures latérales de l'élément de couverture.

Lorsque le compartiment d'évacuation est divisé en plusieurs cellules, chaque cellule peut comporter une ou plusieurs soupapes d'évacuation aménagées sur la couche intérieure.

Chaque cellule peut comporter un ou plusieurs orifices d'évacuation aménagés sur la couche extérieure.

Avantageusement, pour au moins une cellule, la ou les soupapes d'évacuation peuvent être décalées par rapport au(x) orifice(s) d'évacuation de sorte à assurer une étanchéité du volume de culture, par exemple en cas de précipitations.

Alternativement, au moins une cellule d'un compartiment d'évacuation peut comporter uniquement un/des orifices d'évacuation ou uniquement une/des soupapes d'évacuation, en particulier lorsqu'elle communique avec au moins une autre cellule adjacente faisant partie dudit compartiment d'évacuation.

Par exemple, une première cellule d'un compartiment d'évacuation peut uniquement comporter une ou des soupapes d'évacuation, et une deuxième cellule dudit compartiment d'évacuation, adjacente et communicante avec ladite première cellule, peut uniquement comporter des orifices d'évacuation. Cela permet une meilleure étanchéité, mais aussi une régulation plus douce, car l'air chaud doit parcourir plus de chemin pour sortir vers l'extérieur.

Suivant un exemple de réalisation très avantageux, le ou les orifices d'évacuation du compartiment d'évacuation peuvent être aménagés uniquement au niveau d'une cellule, dite centrale, se trouvant en utilisation, au niveau d'une ligne de faitage dudit élément de couverture.

Ladite cellule centrale peut comporter ou non une soupape d'évacuation.

Le compartiment d'évacuation peut comporter une cellule adjacente à ladite cellule centrale et communicante avec ladite cellule centrale, au moins sur un, en particulier sur chaque, côté de ladite cellule centrale, dans le sens de la largeur de l'élément de couverture. Ladite ou lesdites cellules adjacentes peuvent comporter des soupapes d'évacuation mais pas d'orifices d'évacuation.

Au moins deux orifices d'évacuation peuvent présenter la même taille ou des tailles différentes.

Alternativement, ou en plus, au moins deux soupapes d'évacuation peuvent présenter la même taille ou des tailles différentes.

Le nombre d'orifices d'évacuation d'un compartiment d'évacuation, respectivement d'une cellule d'un compartiment d'évacuation, peut être égal au, ou différent du, nombre de soupapes d'évacuation dudit compartiment d'évacuation, respectivement de ladite cellule.

Le nombre d'orifices d'évacuation, respectivement de soupapes d'évacuation, d'une cellule d'un compartiment d'évacuation, peut être égal au, ou différent du, nombre d'orifices d'évacuation, respectivement de soupapes d'évacuation, d'une autre cellule dudit compartiment d'évacuation.

Par ailleurs, au moins un compartiment d'évacuation peut être réalisé par fixation d'une couche additionnelle, sur une couche, dite principale, couvrant tout le volume de culture dans le sens de la largeur, sur une face extérieure de ladite couche principale par rapport audit volume de culture.

Alternativement, la couche additionnelle peut être fixée sur une face intérieure de ladite couche principale.

La fixation de la couche additionnelle sur la couche principale peut être réalisée par collage ou par soudage.

Suivant un deuxième mode de réalisation particulièrement avantageux, l'élément de couverture selon l'invention peut comprendre au moins un compartiment d'aération, dit d'admission, pour faire entrer de l'air frais dans le volume de culture depuis l'extérieur.

Dans ce cas, l'au moins une ouverture d'aération, dite pore d'admission, de la couche intérieure formant ledit compartiment d'admission étant plus petite que l'au moins une ouverture d'aération, dite orifice d'admission, de la couche extérieure formant ledit comportement d'admission.

Autrement dit, le compartiment d'admission comporte des ouvertures d'admission, appelées pores d'admission, qui sont plus petites du côté du volume de culture que les ouvertures d'admission, appelées orifices d'admission, se trouvant du côté extérieur.

Ainsi, l'air froid se trouvant à l'extérieur, entre dans le compartiment d'admission par les orifices d'admission aménagés sur la couche extérieure dudit compartiment, puis entre dans le volume de culture par les pores d'admission aménagés sur la couche intérieure dudit compartiment. Les orifices d'admission étant plus grands que les pores d'admission, l'air froid entre plus facilement dans le compartiment d'admission qu'il n'est admis dans le volume de culture. Cela a pour effet de faire stagner l'air frais dans le compartiment d'admission, avant son introduction dans le volume de culture, de sorte qu'il est (pré-)chauffé préalablement à son introduction dans le volume de culture.

Dans une version préférée, l'élément de couverture selon l'invention peut comprendre un compartiment d'admission au niveau d'au moins une, en particulier au niveau de chaque, bordure latérale dudit élément de couverture, de sorte à se trouver en utilisation, sur une partie basse de l'élément de couverture.

En effet, l'air frais se trouvant en bas, par rapport à l'air chaud, une position basse du compartiment d'admission permet de faciliter son admission dans le volume de culture.

Lorsque le compartiment d'admission est divisé en plusieurs cellules, chaque cellule du compartiment d'admission peut comporter un ou plusieurs pores d'admission aménagés sur la couche intérieure.

De plus, chaque cellule du compartiment d'admission peut comporter un ou plusieurs orifices d'admission aménagés sur la couche extérieure.

Au moins une cellule du compartiment d'admission, peut comporter uniquement un/des orifices d'admission ou uniquement une/des pores d'admission, en particulier lorsqu'elle communique avec une cellule adjacente dudit compartiment d'admission.

Les pores d'admission peuvent être décalés par rapport aux orifices d'admission de sorte à assurer une étanchéité, par exemple en cas de précipitation.

Alternativement, au moins une cellule du compartiment d'admission, peut comporter uniquement un/des orifices d'admission ou uniquement un/des pores d'admission, en particulier lorsqu'elle communique avec au moins une autre cellule adjacente dudit compartiment d'admission.

Par exemple, une première cellule du compartiment d'admission peut uniquement comporter un ou des orifices d'admission, et une deuxième cellule du compartiment d'admission, communicant avec ladite première cellule, peut uniquement comporter des pores d'admission. Cela permet une meilleure étanchéité, mais aussi une régulation plus douce, car l'air froid doit parcourir plus de chemin pour entrer dans le volume de culture.

Au moins deux orifices d'admission peuvent présenter la même taille ou des tailles différentes.

Alternativement, ou en plus, au moins deux pores d'admission peuvent présenter la même taille ou des tailles différentes.

Le nombre de pores d'admission d'un compartiment d'admission, respectivement d'une cellule d'un compartiment d'admission, peut être égal au, ou différent du, nombre d'orifices d'admission dudit compartiment d'admission, respectivement de ladite cellule.

Le nombre de pores d'admission, respectivement d'orifices d'admission, d'une cellule d'un compartiment d'admission, peut être égal au, ou différent du, nombre de pores d'admission, respectivement d'orifices d'admission, d'une autre cellule dudit compartiment d'admission.

Par ailleurs, au moins un compartiment d'admission peut être réalisé par fixation d'une couche additionnelle, sur une couche, dite principale, couvrant tout le volume de culture dans le sens de la largeur, sur une face intérieure de ladite couche principale par rapport audit volume de culture.

Alternativement, la couche additionnelle peut être fixée sur une face extérieure de ladite couche principale.

La fixation de la couche additionnelle sur la couche principale peut être réalisée par collage ou par soudage.

Bien entendu, le deuxième mode de réalisation qui vient d'être décrit peut être combiné au premier mode de réalisation décrit plus haut.

Ainsi, suivant un exemple de réalisation préféré, l'élément de couverture selon l'invention peut comprendre :
- un compartiment d'évacuation positionné sur une partie centrale dudit élément de couverture, à distance des bordures latérales, de sorte à se trouver en utilisation, sur une partie haute de l'élément de couverture ; et
- un compartiment d'admission au niveau d'au moins une, en particulier au niveau de chaque, bordure latérale dudit élément de couverture, de sorte à se trouver en utilisation, sur une partie basse de l'élément de couverture.

En particulier, le compartiment d'évacuation peut être adjacent au(x) compartiment(s) d'admission. Dans ce cas, le compartiment d'évacuation peut être positionné à égale distance des bordures latérales longitudinales de l'élément de couverture et peut s'étendre sur une distance de l'ordre de la moitié de la largeur de l'élément de couverture, et un compartiment d'admission peut être disposé au niveau de chaque bordure latérale longitudinale et s'étendre sur une distance de l'ordre du quart de la largeur de l'élément de couverture.

Alternativement, le compartiment d'évacuation et le compartiment d'admission peuvent être séparés par une zone ne comportant aucun compartiment.

Lorsque l'élément de couverture comprend un compartiment d'évacuation et au moins un compartiment d'admission, ledit élément de couverture peut avantageusement comprendre une couche commune audit compartiment d'évacuation et au(x)dit(s) compartiment(s) d'admission, ladite couche commune formant la couche intérieure pour le compartiment d'évacuation et la couche extérieure pour le(s)dit(s) compartiment(s) d'admission.

Un tel arrangement permet d'obtenir une architecture plus simple et moins coûteuse pour l'élément de couverture.

Selon l'invention, au moins un compartiment d'aération, c'est-à-dire au moins un compartiment d'évacuation et/ou au moins un compartiment d'admission, peut se présenter sous la forme d'un couloir allongé dans le sens de la longueur dudit élément de couverture, sur une partie ou sur toute la longueur dudit élément de couverture.

De plus, au moins un compartiment d'aération est obtenu par soudage, en particulier thermique, ou par collage, de la couche extérieure avec la couche intérieure.

La ligne de soudage/collage peut être continue de sorte à obtenir un compartiment étanche.

Alternativement la ligne de collage/soudage peut être discontinue, ou non aboutie sur au moins une de ses extrémités, étanche ou non, continue de sorte à obtenir un compartiment non étanche.

Par ailleurs, au moins une ouverture d'aération d'une couche, à savoir :
- au moins une soupape d'évacuation,
- au moins un orifice d'évacuation,
- au moins un orifice d'admission, et/ou
- au moins un pore d'admission ;
peut être obtenue par :
- perforation de ladite couche, par exemple par un dispositif thermique, ou
- par découpe de ladite couche, par exemple par poinçonnage, ou
- par une ligne de collage/soudure discrète ou non aboutie sur au moins une de ses extrémités.

Suivant un exemple de réalisation avantageux permettant une bonne régulation :
- au moins une, en particulier chaque, soupape d'évacuation peut présenter une taille comprise entre 40mm et 60mm, et/ou
- au moins un, en particulier chaque, orifice d'évacuation présente une taille comprise entre 3mm et 20mm, préférentiellement entre 5mm et 15mm, et en particulier égale à 13 mm.
- au moins un orifice d'admission peut présenter une taille comprise entre 3mm et 20mm, préférentiellement 5mm et 13mm et/ou
- au moins un pore d'admission peut présenter une taille comprise entre 0.5mm et 15mm.

Dans le cas où, un orifice d'évacuation, respectivement un orifice d'admission, est réalisé une ligne de collage/soudure discrète, ou non aboutie sur au moins une de ses extrémités, ledit orifice peut présenter une longueur de 110mm voire 120mm.

L'élément de couverture selon l'invention peut en outre comporter au moins une zone prédécoupée, prévue pour être ouverte ou arrachée, en particulier manuellement, sur la couche extérieure d'un compartiment d'aération, et/ou sur une autre partie dudit élément de couverture ne comportant pas de de compartiment d'aération.

Une telle zone prédécoupée permet de réaliser, à la volée, des ouvertures d'aération, préférentiellement manuellement, en plus de celles qui sont prévues dans les compartiments d'aérations.

L'élément de couverture selon l'invention, en particulier chacune des couches composant l'élément de couverture selon l'invention, peut être réalisée en plastique, par exemple en polyéthylène.

Selon un autre aspect de l'invention, il est proposé un abri de culture, de type serre, comprenant :
- une ossature, en particulier rigide, et
- au moins un élément de couverture selon l'invention.

L'abri de culture selon l'invention peut être un abri de culture multi-chapelle, un tunnel, un bi-tunnel, un tunnel de jardin, un tunnel de potager, un mini-tunnel, etc.

### Description des figures et modes de réalisation

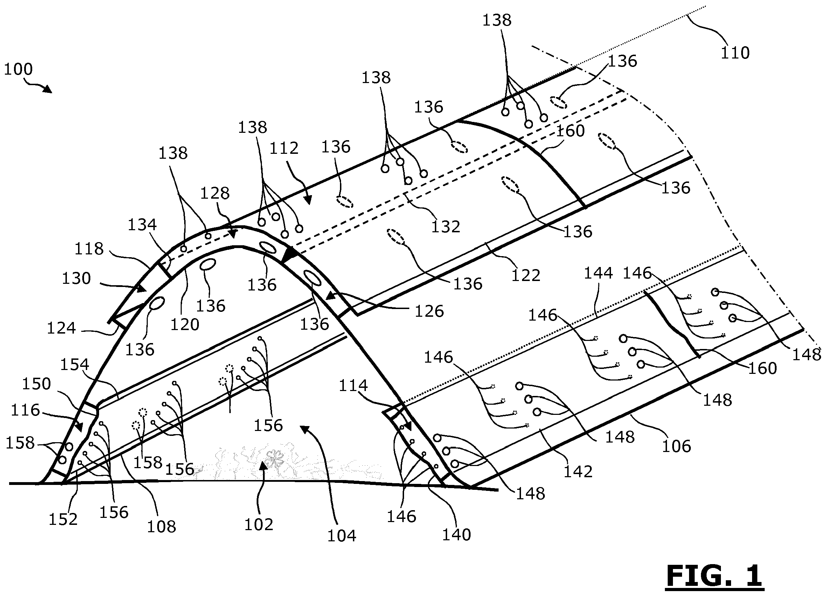

D'autres avantages et caractéristiques apparaîtront à l'examen de la description détaillée de modes de réalisation nullement limitatifs, et des dessins annexés sur lesquels les FIGURES 1-4 sont des représentations schématiques de quatre exemples de réalisation d'un élément de couverture selon l'invention.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à de l'état de la technique antérieur. Cette sélection comprend au moins une caractéristique de préférence fonctionnelle sans détails structurels, ou avec seulement une partie des détails structurels si cette partie est uniquement suffisante pour conférer un avantage technique ou pour différencier l'invention par rapport à l'état de la technique antérieur.

Sur les figures, les éléments communs à plusieurs figures conservent la même référence.

La FIGURE 1 est une représentation schématique partielle d'un premier exemple de réalisation d'un élément de couverture souple selon l'invention.

L'élément de couverture 100 représenté sur la FIGURE 1 est utilisé par la culture végétale. En particulier, il est disposé au-dessus d'une zone de culture 102, avec ou sans utilisation d'une ossature rigide, et définit un volume de culture 104 au-dessus de ladite zone de culture 104.

L'élément de couverture 100 est, dans l'exemple représenté, longitudinale et présente deux bordures latérales longitudinale 106 et 108.

Lorsqu'il est disposé sur une zone de culture, l'élément de couverture 100 est arrondi de sorte à présenter une ligne de faitage 110.

L'élément de couverture 100 comporte trois compartiments d'aération 112-116 permettant une régulation de l'air à l'intérieur du volume de culture 104.

Selon l'invention le compartiment d'aération 112 est un compartiment d'évacuation d'air, en particulier d'air chaud, depuis l'intérieur du volume de culture 104 vers l'extérieur du volume de culture 104.

Le compartiment d'évacuation 112 est positionné en une zone centrale de l'élément de couverture, sensiblement à égale distance des bordures latérales 106 et 108 dudit élément de couverture. En particulier, le compartiment d'évacuation 112 se trouve au niveau de la ligne de faitage 110, et s'étend de part et d'autre de ladite ligne de faitage 110 dans le sens de la largeur de l'élément de couverture 110.

Le compartiment d'évacuation d'air 112 est formé par une couche additionnelle 118, formant une couche extérieure, fixée sur une couche principale 120, sur une face opposée au volume de culture, par soudage thermique, suivant deux lignes de soudage continues et étanches longitudinales 112-124. La couche principale 120 couvre la zone de culture 102 et s'étend sur toute la largeur de l'élément de couverture 100.

Le compartiment d'évacuation d'air 112 est divisé en trois cellules d'évacuation d'air 126-130 adjacentes, longitudinales et communicantes entre-elles. Les cellules d'évacuation d'air 126-130 sont formées par soudage thermique de la couche extérieure 118 avec la couche principale 120 suivant deux lignes de soudage 132-134 longitudinales et discontinues.

Dans l'exemple représenté sur la FIGURE 1, la cellule d'évacuation 128 est centrale et se trouve centrée par rapport à la ligne de faitage 110. La cellule d'évacuation 126 se trouve du côté, et à distance, de la bordure latérale 106 par rapport à la ligne de faitage 110, et la cellule d'évacuation 130 se trouve du côté, et à distance, de la bordure latérale 108 par rapport à la ligne de faitage 110.

Le compartiment d'évacuation 112 comprend :
- une pluralité d'ouvertures d'évacuation d'air 136, dites soupapes d'évacuation, aménagées dans la couche principale 120, et permettant le passage de l'air du volume de culture 104 vers le compartiment d'évacuation d'air 112 ; et
- une pluralité d'ouvertures d'évacuation d'air 138, dites orifices d'évacuation, aménagées dans la couche extérieure 118, permettant le passage de l'air du compartiment d'évacuation d'air 112 vers l'extérieur.

Les soupapes d'évacuation 136 présentent une taille supérieure à la taille des orifices d'évacuation 138. Suivant un exemple nullement limitatif, chaque soupape d'évacuation présente une taille de 50mm et chaque orifice présente une taille de 5mm. Bien entendu, les soupapes d'évacuation, respectivement les orifices d'évacuation, peuvent ne pas présenter la même taille.

Dans l'exemple représenté sur la FIGURE 1 :
- les cellules d'évacuation 126 et 130 comportent, chacune, une seule rangée longitudinale de soupapes d'évacuation 136 et ne comportent pas d'orifices d'évacuation ; et
- la cellule d'évacuation 130 comporte deux rangées longitudinales de soupapes d'évacuation 136, quatre rangées longitudinales d'orifices d'évacuation.

Alternativement, chaque cellule d'évacuation peut comporter des orifices d'évacuation. Le nombre d'orifices d'évacuation dans chaque cellule peut être identique ou différent.

Par ailleurs, chaque cellule peut ne pas comporter de soupape d'évacuation. Le nombre de soupape d'évacuation dans chaque cellule peut être identique ou différent.

En fonctionnement, l'air chaud se trouvant dans le volume de culture 104, passe dans chaque cellule d'évacuation 126-130 du compartiment d'évacuation 112 par les soupapes d'évacuation 136. L'air entrant dans les cellules 126 et 130 passe ensuite dans le compartiment central 128 au travers des lignes de soudage discontinues 132 et 134 par lesquelles les cellules 126 et 130 communiquent avec la cellule centrale 128. L'air entrant dans la cellule 128 sort de la cellule 128, et par conséquent du compartiment d'évacuation 112, par les orifices d'évacuation 138 de la cellule 128. Comme les soupapes d'évacuation 136 sont de tailles plus grandes que les orifices d'évacuation 138, l'air entre plus facilement dans le compartiment d'évacuation 112, qu'il n'est évacué dudit compartiment 112 vers l'extérieur. Cela a pour effet de gonfler le compartiment d'évacuation 112 qui se gonfle d'air chaud.

Le compartiment d'aération 114 est un compartiment d'admission d'air, en particulier d'air froid, depuis l'extérieur du volume de culture 104 vers l'intérieur du volume de culture 104.

Le compartiment d'admission 114 est positionné en niveau de la bordure latérale 106, de sorte qu'il se trouve en partie basse de l'élément de couverture 100 lorsque celui-ci est disposé sur la zone de culture 102.

Le compartiment d'admission d'air 114 est formé par une couche additionnelle 140, formant une couche intérieure, fixée sur une face de la couche principale 120 se trouvant du côté du volume de culture 104, par soudage thermique, suivant deux lignes de soudage 142 et 144, continues, étanches et longitudinales.

Le compartiment d'admission 114 comprend :
- une pluralité d'ouvertures d'admission d'air 146, dites pores d'admission, aménagées dans la couche intérieure 140, et permettant le passage de l'air du compartiment d'admission d'air 114 dans le volume de culture 104 ; et
- une pluralité d'ouvertures d'admission d'air 148, dites orifices d'admission, aménagées dans la couche principale 120, permettant le passage de l'air de l'extérieure vers le compartiment d'admission d'air 114.

Les pores d'admission 146 présentent une taille inférieure à la taille des orifices d'admission 148. Suivant un exemple nullement limitatif, chaque pore d'admission présente une taille de 1mm et chaque orifice d'admission présente une taille de 5mm. Bien entendu, les pores d'admission 146, respectivement les orifices d'admission 148, peuvent ne pas présenter la même taille.

Dans l'exemple représenté sur la FIGURE 1, le compartiment d'admission comporte quatre rangées longitudinales de pores d'admission 146 et trois rangées longitudinales d'orifices d'admission 148.

En fonctionnement, l'air froid se trouvant à l'extérieur du volume de culture 104, passe dans le compartiment d'admission 114 par les orifices d'admission 148. L'air se trouvant dans le compartiment d'admission 114 entre dans le volume de culture 104 par les pores d'admission 146. Comme les orifices d'admission 148 sont plus grands que les pores d'admission 146, l'air froid entre plus facilement dans le compartiment d'admission 114 qu'il n'est admis dans le volume de culture 104. Cela a pour effet de faire stagner l'air frais dans le compartiment d'admission 114, avant son introduction dans le volume de culture 104, de sorte qu'il est (pré-)chauffé préalablement à son introduction dans le volume de culture 104.

Le compartiment d'aération 116 est un compartiment d'admission d'air, en particulier d'air froid, depuis l'extérieur du volume de culture 104 vers l'intérieur du volume de culture 104.

Le compartiment d'admission 116 est positionné en niveau de la bordure latérale 108, de sorte qu'ils se trouvent en partie basse de l'élément de couverture 100 lorsque celui-ci est disposé sur la zone de culture 102.

Le compartiment d'admission d'air 116 est formé par une couche additionnelle 150, formant une couche intérieure, fixée sur une face de la couche principale 120 se trouvant du côté du volume de culture 104, par soudage thermique, suivant deux lignes de soudage 152 et 154, continues, étanches et longitudinales.

Le compartiment d'admission 116 comprend :
- une pluralité d'ouvertures d'admission d'air 156, dites pores d'admission, aménagées dans la couche intérieure 150, et permettant le passage de l'air du compartiment d'admission d'air 116 dans le volume de culture 104 ; et
- une pluralité d'ouvertures d'admission d'air 158, dites orifices d'admission, aménagées dans la couche principale 120, permettant le passage de l'air de l'extérieure vers le compartiment d'admission d'air 116.

Les pores d'admission 156 présentent une taille inférieure à la taille des orifices d'admission 158. Suivant un exemple nullement limitatif, chaque pore d'admission 156 présente une taille de 1mm et chaque orifice d'admission 158 présente une taille de 5mm. Bien entendu, les pores d'admission 156, respectivement les orifices d'admission 158, peuvent ne pas présenter la même taille.

Dans l'exemple représenté sur la FIGURE 1, le compartiment d'admission 116 comporte cinq rangées longitudinales de pores d'admission 156 et deux rangées longitudinales d'orifices d'admission 158.

En fonctionnement, l'air froid se trouvant à l'extérieur du volume de culture 104, passe dans le compartiment d'admission 116 par les orifices d'admission 158. L'air se trouvant dans le compartiment d'admission 116 entre dans le volume de culture 104 par les pores d'admission 156. Comme les orifices d'admission 158 sont plus grands que les pores d'admission 156, l'air froid entre plus facilement dans le compartiment d'admission 116 qu'il n'est admis dans le volume de culture 104. Cela a pour effet de faire stagner l'air frais dans le compartiment d'admission 116, avant son introduction dans le volume de culture 104, de sorte qu'il est (pré-)chauffé préalablement à son introduction dans le volume de culture 104.

Tel que représenté sur la FIGURE 1, chaque compartiment d'aération 112-116 peut être subdivisé en sections longitudinales par soudage thermique, suivant des lignes continues transversales, perpendiculaires aux bordures latérales 106 et 108.

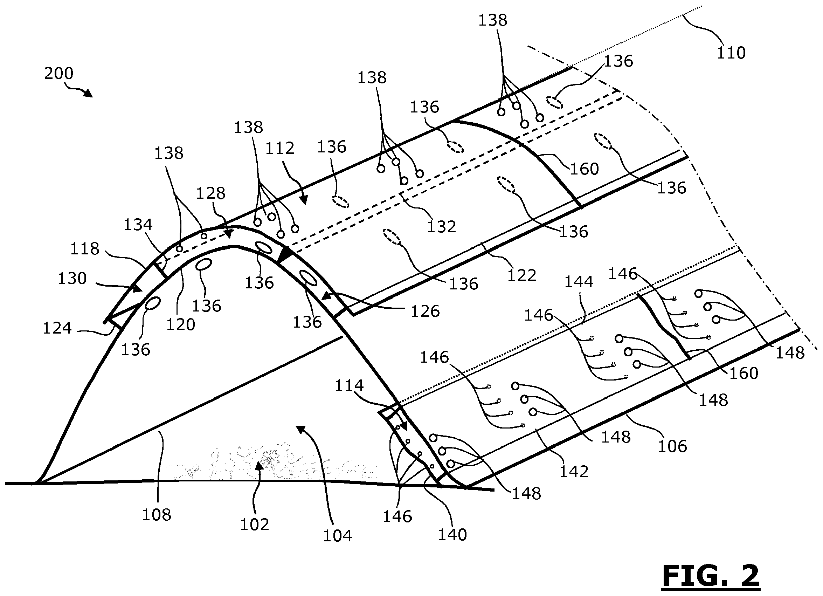

La FIGURE 2 est une représentation schématique d'un deuxième exemple de réalisation d'un élément de couverture selon l'invention.

L'élément de couverture 200 représenté sur la FIGURE 2 comprend tous les éléments de l'élément de couverture 100 de la FIGURE 1, sauf le compartiment d'admission 116.

Autrement dit, l'élément de couverture 200 comprend uniquement le compartiment d'évacuation 112 et le compartiment d'admission 114.

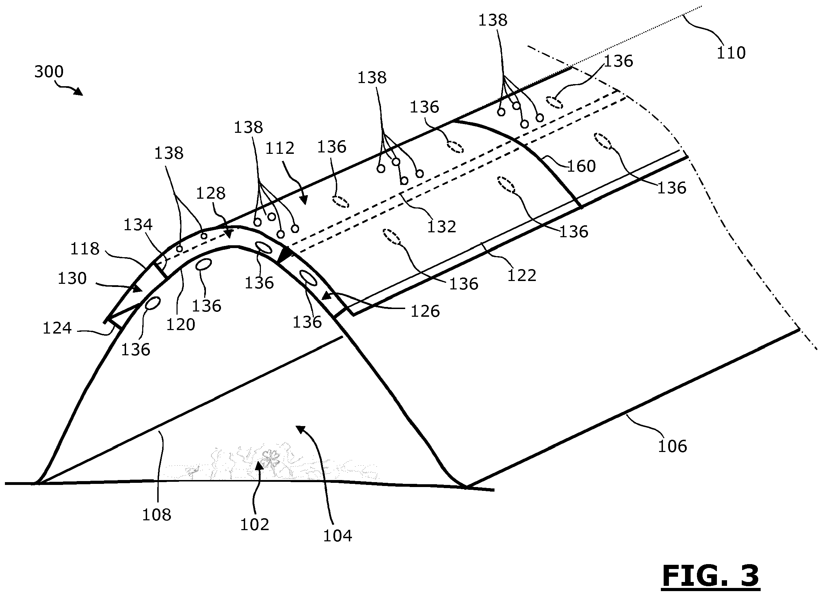

La FIGURE 3 est une représentation schématique d'un troisième exemple de réalisation d'un élément de couverture selon l'invention.

L'élément de couverture 300 représenté sur la FIGURE 3 comprend tous les éléments de l'élément de couverture 100 de la FIGURE 1, sauf les compartiments d'admission 114 et 116.

Autrement dit, l'élément de couverture 300 comprend uniquement le compartiment d'évacuation 112.

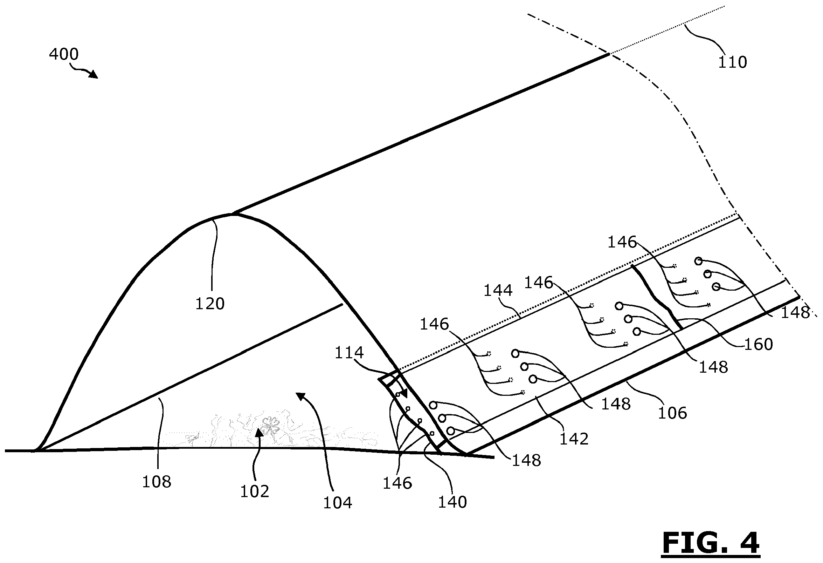

La FIGURE 4 est une représentation schématique d'un quatrième exemple de réalisation d'un élément de couverture selon l'invention.

L'élément de couverture 400 représenté sur la FIGURE 4 comprend tous les éléments de l'élément de couverture 100 de la FIGURE 1, sauf le compartiment d'évacuation 112 et le compartiment d'admission 116.

Autrement dit, l'élément de couverture 400 comprend uniquement le compartiment d'admission 114.

Suivant encore un autre exemple de réalisation, non représenté sur les FIGURES, l'élément de couverture peut comprendre uniquement les compartiments d'admission 114 et 116.

Suivant encore un autre exemple de réalisation, le compartiment d'évacuation peut ne pas être divisé en plusieurs cellules, mais comprendre qu'une seule cellule.

Suivant une caractéristique non représentée sur les FIGURES, l'élément de couverture selon l'invention peut optionnellement comporter au moins une zone prédécoupée, prévue pour être ouverte ou arrachée, en particulier manuellement. Au moins une zone prédécoupée peut être disposée sur la couche extérieure d'au moins un compartiment d'aération, et/ou sur une autre partie dudit élément de couverture ne comportant pas de compartiment d'aération.

De plus, l'élément de couverture selon l'invention, en particulier chacune des couches composant l'élément de couverture selon l'invention, peut être réalisée en plastique, transparent ou non, coloré ou non, tel que par exemple en polyéthylène.

Bien entendu, l'invention n'est pas limitée aux exemples détaillés ci-dessus.

Alternativement à ce qui vient d'être décrit, au moins un des compartiments d'admission d'air peut être divisé en plusieurs cellules d'admission, en particulier longitudinales, communicantes ou non, de manière similaire à ce qui est décrit pour le compartiment d'évacuation 112.

De plus, le compartiment d'évacuation d'air 112 peut ne pas être divisé en plusieurs cellules d'évacuation.

Le(s) nombre(s) des soupapes/orifices/pores peu(ven)t être différent(s) de ce qui est décrit.

Dans l'exemple décrit la couche 120 est commune aux compartiments d'aération. Alternativement, au moins deux compartiments peuvent ne pas comprendre de couche commune.

Dans les exemples décrits le compartiment d'extraction 112 est obtenu par fixation d'une couche additionnelle 118 sur une face extérieure de la couche principale 120, vu du volume de culture. Alternativement, la couche additionnelle 118 peut être fixée sur une face intérieure de la couche principale 120.

En outre, dans les exemples décrits chaque compartiment d'admission 114-116 est obtenu par fixation d'une couche additionnelle, respectivement 140 et 150, sur une face intérieure de la couche principale 120, vu du volume de culture. Alternativement, au moins une des couches additionnelles 140 et 150 peut être fixée sur une face extérieure de la couche principale 120.

Bien entendu toute ces alternatives peuvent être combinées entre-elles ou avec les exemples décrits.

## Revendications

1. Elément de couverture (100,200,300,400) souple, pour la culture végétale, prévu pour être posé au-dessus d'une zone de culture (102) et créer un volume de culture (104), comprenant au moins un compartiment (112,114,116), dit d'aération, formé entre :
- une couche (120,140,150), dite intérieure, se trouvant, en utilisation, du côté de ladite zone de culture (102), et comportant des ouvertures d'aération (136,146,156) pour laisser passer de l'air entre ledit volume de culture (104) et ledit compartiment d'aération (112,114,116), et
- une couche (118,120), dite extérieure, se trouvant, en utilisation, du côté opposé à ladite zone de culture (102), et comportant des ouvertures d'aération (138,148,158) pour laisser passer de l'air entre ledit compartiment d'aération (112,114,116) et l'extérieur.
**caractérisé en ce qu'**au moins un compartiment d'aération (112,114,116) est un compartiment (112), dit d'évacuation, pour évacuer de l'air chaud du volume de culture (104) vers l'extérieur, l'au moins une ouverture d'aération (136), dite soupape d'évacuation, de la couche intérieure (120) formant ledit compartiment d'évacuation (112) étant plus grande que l'au moins une ouverture d'aération (138), dite orifice d'évacuation, de la couche extérieure (118) formant ledit compartiment d'évacuation (112).

2. Elément de couverture (100,200,300) selon la revendication précédente, **caractérisé en ce qu'**au moins un compartiment d'aération (112) est divisé en au moins deux cellules (126-130) communiquant entre-elles, dans une direction perpendiculaire aux bordures latérales (106,108) dudit élément de couverture (100,200,300).

3. Elément de couverture (100,200,300) selon l'une quelconque des revendications précédentes, **caractérisé en ce que** le compartiment d'évacuation (112) est positionné sur une partie centrale dudit élément de couverture (100,200,300), à distance des bordures latérales (106,108), de sorte à se trouver en utilisation, sur une partie haute de l'élément de couverture (100,200,300).

4. Elément de couverture (100,200,300) selon les revendications 2 et 3, **caractérisé en ce que** le ou les orifices d'évacuation (138) du compartiment d'évacuation sont aménagés uniquement au niveau d'une cellule (128), dite centrale, se trouvant en utilisation, au niveau d'une ligne de faitage (110) dudit élément de couverture (100,200,300).

5. Elément de couverture (100,200,300) selon l'une quelconque des revendications précédentes, **caractérisé en ce qu'**au moins une soupape d'évacuation (136) présente une taille comprise entre 40 et 60mm, et/ou au moins un orifice d'évacuation (138) présente une taille comprise entre 3 et 20mm.

6. Elément de couverture (100,200,300) selon l'une quelconque des revendications précédentes, **caractérisé en ce qu'**au moins un compartiment d'évacuation (112) est réalisé par fixation d'une couche additionnelle (118), sur une couche (120), dite principale, couvrant tout le volume de culture (104) dans le sens de la largeur, sur une face extérieure de ladite couche principale (120) par rapport audit volume de culture (104).

7. Elément de couverture (100,200,400) selon l'une quelconque des revendications précédentes, **caractérisé en ce qu'**au moins un compartiment d'aération est un compartiment d'aération (114,116), dit d'admission, pour faire entrer de l'air frais dans le volume de culture (104) depuis l'extérieur, l'au moins une ouverture d'aération (146,156), dite pore d'admission, de la couche intérieure (140,150) formant ledit compartiment d'admission (114,116) étant plus petite que l'au moins une ouverture d'aération (148,158), dite orifice d'admission, de la couche extérieure (120) formant ledit compartiment d'admission (114,116).

8. Elément de couverture (100,200,400) selon la revendication précédente, **caractérisé en ce qu'**il comprend un compartiment d'admission (114,116) au niveau d'au moins une bordure latérale (106,108) dudit élément de couverture (100,200,400), de sorte à se trouver en utilisation, sur une partie basse dudit élément de couverture (100,200,400).

9. Elément de couverture (100,200,400) selon l'une quelconque des revendications 7 ou 8, **caractérisé en ce qu'**au moins un orifice d'admission (148,158) présente une taille comprise entre 3 et 20mm, et/ou au moins un pore d'admission (146,156) présente une taille comprise entre 0.5mm et 15mm.

10. Elément de couverture (100,200,400) selon l'une quelconque des revendications 7 à 9, **caractérisé en ce qu'**au moins un compartiment d'admission (114,116) est réalisé par fixation d'une couche additionnelle (140,150), sur une couche (120), dite principale, couvrant tout le volume de culture (104) dans le sens de la largeur, sur une face intérieure de ladite couche principale (120) par rapport audit volume de culture (104).

11. Elément de couverture (100,200) selon l'une quelconque des revendications 7 à 10, **caractérisé en ce qu'**il comprend :
- un compartiment d'évacuation (112) positionné sur une partie centrale dudit élément de couverture (100,200), à distance des bordures latérales (106,108), de sorte à se trouver en utilisation, sur une partie haute de l'élément de couverture (100,200) ; et
- un compartiment d'admission (114,116) au niveau d'au moins une bordure latérale (106,108) dudit élément de couverture (100,200), de sorte à se trouver en utilisation, sur une partie basse de l'élément de couverture (100,200).

12. Elément de couverture (100,200) selon la revendication précédente, **caractérisé en ce qu'**il comprend une couche commune (120) au compartiment d'évacuation (112) et au(x) compartiment(s) d'admission (114,116), ladite couche commune (120) formant la couche intérieure pour le compartiment d'évacuation (112) et la couche extérieure pour le(s) compartiment(s) d'admission (114,116).

13. Elément de couverture (100,200,300,400) selon l'une quelconque des revendications précédentes, **caractérisé en ce qu'**au moins un compartiment d'aération (112,114,116) se présente sous la forme d'un couloir allongé dans le sens de la longueur dudit élément de couverture (100,200,300,400).

14. Elément de couverture (100,200,300,400) selon l'une quelconque des revendications précédentes, **caractérisé en ce qu'**au moins un compartiment d'aération (112,114,116) est obtenu par soudage ou collage de la couche extérieure (118,120) avec la couche intérieure (120,140,150).

15. Elément de couverture (100,200,300,400) selon l'une quelconque des revendications précédentes, **caractérisé en ce qu'**au moins une ouverture d'aération (138,136,148,158,146,156) d'une couche (118,120,140,150) est obtenue perforation de ladite couche (118,120,140,150) ou par découpe de ladite couche ou encore par une ligne de collage/soudure discrète ou non aboutie.

16. Elément de couverture selon l'une quelconque des revendications précédentes, **caractérisé en ce qu'**il comporte en outre au moins une zone prédécoupée, prévue pour être ouverte ou arrachée, sur la couche extérieure d'un compartiment d'aération, et/ou sur une autre partie dudit élément de couverture ne comportant pas de compartiment d'aération.

17. Abri de culture, de type serre, comprenant :
- une ossature, en particulier rigide, et
- au moins un élément de couverture (100,200,300,400) souple selon l'une quelconque des revendications précédentes.

## Patentansprüche

1. Biegsames Abdeckungselement (100, 200, 300, 400) für den Pflanzenanbau, das dazu vorgesehen ist, über einen Anbaubereich (102) gesetzt zu werden und ein Anbauvolumen (104) zu schaffen, umfassend zumindest einen Raum (112, 114, 116), Lüftungsraum genannt, der ausgebildet ist zwischen:
- einer Lage (120, 140, 150), Innenlage genannt, die sich bei Gebrauch auf der Seite des Anbaubereichs (102) befindet und Lüftungsöffnungen (136, 146, 156) zum Durchlassen von Luft zwischen dem Anbauvolumen (104) und dem Lüftungsraum (112, 114, 116) aufweist, und
- einer Lage (118, 120), Außenlage genannt, die sich bei Gebrauch auf der dem Anbaubereich (102) gegenüberliegenden Seite befindet und Lüftungsöffnungen (138, 148, 158) zum Durchlassen von Luft zwischen dem Lüftungsraum (112, 114, 116) und dem Außenbereich aufweist,
**dadurch gekennzeichnet, dass** zumindest ein Lüftungsraum (112, 114, 116) ein Raum (112), Entlüftungsraum genannt, ist, um Warmluft aus dem Anbauvolumen (104) nach außen abzuleiten, wobei die zumindest eine Lüftungsöffnung (136), Entlüftungsventil genannt, der den Entlüftungsraum (112) bildenden Innenlage (120) größer ist als die zumindest eine Lüftungsöffnung (138), Entlüftungslochung genannt, der den Entlüftungsraum (112) bildenden Außenlage (118).

2. Abdeckungselement (100, 200, 300) nach dem vorangehenden Anspruch, **dadurch gekennzeichnet, dass** zumindest ein Lüftungsraum (112) in zumindest zwei miteinander verbundenen Zellen (126 - 130) in einer Richtung unterteilt ist, die senkrecht zu den Seitenrändern (106, 108) des Abdeckungselements (100, 200, 300) verläuft.

3. Abdeckungselement (100, 200, 300) nach einem der vorangehenden Ansprüche, **dadurch gekennzeichnet, dass** der Entlüftungsraum (112) an einem Mittelteil des Abdeckungselements (100, 200, 300) im Abstand von den Seitenrändern (106, 108) so positioniert ist, dass er sich bei Gebrauch an einem oberen Teil des Abdeckungselements (100, 200, 300) befindet.

4. Abdeckungselement (100, 200, 300) nach den Ansprüchen 2 und 3, **dadurch gekennzeichnet, dass** die Entlüftungslochung bzw. -lochungen (138) des Entlüftungsraums nur im Bereich einer Zelle (128), mittige Zelle genannt, angeordnet sind, die sich bei Gebrauch im Bereich einer Firstlinie (110) des Abdeckungselements (100, 200, 300) befindet.

5. Abdeckungselement (100, 200, 300) nach einem der vorangehenden Ansprüche, **dadurch gekennzeichnet, dass** zumindest ein Entlüftungsventil (136) eine Größe zwischen 40 und 60 mm aufweist, und/oder zumindest eine Entlüftungslochung (138) eine Größe zwischen 3 und 20 mm aufweist.

6. Abdeckungselement (100, 200, 300) nach einem der vorangehenden Ansprüche, **dadurch gekennzeichnet, dass** zumindest ein Entlüftungsraum (112) durch Befestigung einer zusätzlichen Lage (118) an einer Lage (120), Hauptlage genannt, ausgebildet ist, welche das gesamte Anbauvolumen (104) in Richtung der Breite auf einer Außenseite der Hauptlage (120) bezüglich des Anbauvolumens (104) überdeckt.

7. Abdeckungselement (100, 200, 400) nach einem der vorangehenden Ansprüche, **dadurch gekennzeichnet, dass** zumindest ein Lüftungsraum ein Lüftungsraum (114, 116), Belüftungsraum genannt, ist, um von außen Frischluft in das Anbauvolumen (104) einzuleiten, wobei die zumindest eine Lüftungsöffnung (146, 156), Belüftungspore genannt, der den Belüftungsraum (114, 116) bildenden Innenlage (140, 150) kleiner ist als die zumindest eine Lüftungsöffnung (148, 158), Belüftungsöffnung genannt, der den Belüftungsraum (114, 116) bildenden Außenlage (120).

8. Abdeckungselement (100, 200, 400) nach dem vorangehenden Anspruch, **dadurch gekennzeichnet, dass** es einen Belüftungsraum (114, 116) im Bereich von zumindest einem Seitenrand (106, 108) des Abdeckungselements (100, 200, 400) so aufweist, dass er sich bei Gebrauch an einem unteren Teil des Abdeckungselements (100, 200, 400) befindet.

9. Abdeckungselement (100, 200, 400) nach einem der Ansprüche 7 oder 8, **dadurch gekennzeichnet, dass** zumindest eine Belüftungslochung (148, 158) eine Größe zwischen 3 und 20 mm aufweist und/oder zumindest eine Belüftungspore (146, 156) eine Größe zwischen 0,5 mm und 15 mm aufweist.

10. Abdeckungselement (100, 200, 400) nach einem der Ansprüche 7 bis 9, **dadurch gekennzeichnet, dass** zumindest ein Belüftungsraum (114, 116) durch Befestigung einer zusätzlichen Lage (140, 150) an einer Lage (120), Hauptlage genannt, ausgebildet ist, die das gesamte Anbauvolumen (104) in Richtung der Breite an einer Innenseite der Hauptlage (120) bezüglich des Anbauvolumens (104) überdeckt.

11. Abdeckungselement (100, 200) nach einem der Ansprüche 7 bis 10, **dadurch gekennzeichnet, dass** es umfasst:
- einen Entlüftungsraum (112), der an einem mittigen Teil des Abdeckungselements (100, 200) im Abstand von den Seitenrändern (106, 108) so positioniert ist, dass er sich bei Gebrauch an einem oberen Teil des Abdeckungselements (100, 200) befindet, und
- einen Belüftungsraum (114, 116) im Bereich von zumindest einem Seitenrand (106, 108) des Abdeckungselements (100, 200) so, dass er sich bei Gebrauch an einem unteren Teil des Abdeckungselements (100, 200) befindet.

12. Abdeckungselement (100, 200) nach dem vorangehenden Anspruch, **dadurch gekennzeichnet, dass** es eine dem Entlüftungsraum (112) und dem bzw. den Belüftungsräumen (114, 116) gemeinsam angehörende Lage (120) aufweist, wobei die gemeinsame Lage (120) die Innenlage für den Entlüftungsraum (112) und die Außenlage für den bzw. die Belüftungsräume (114, 116) bildet.

13. Abdeckungselement (100, 200, 300, 400) nach einem der vorangehenden Ansprüche, **dadurch gekennzeichnet, dass** zumindest ein Lüftungsraum (112, 114, 116) in Form eines in Richtung der Länge des Abdeckungselements (100, 200, 300, 400) langgestreckten Gangs vorliegt.

14. Abdeckungselement (100, 200, 300, 400) nach einem der vorangehenden Ansprüche, **dadurch gekennzeichnet, dass** zumindest ein Lüftungsraum (112, 114, 116) durch Verschweißen oder Verkleben der Außenlage (118, 120) mit der Innenlage (120, 140, 150) erhalten wird.

15. Abdeckungselement (100, 200, 300, 400) nach einem der vorangehenden Ansprüche, **dadurch gekennzeichnet, dass** zumindest eine Lüftungsöffnung (138, 136, 148, 158, 146, 156) einer Lage (118, 120, 140, 150) durch Perforation der Lage (118, 120, 140, 150) oder durch Durchschneiden der Lage oder auch durch eine diskrete bzw. nicht durchgehende Klebe-/Schweißlinie erhalten wird.

16. Abdeckungselement nach einem der vorangehenden Ansprüche, **dadurch gekennzeichnet, dass** es ferner an der Außenlage eines Lüftungsraums und/oder an einem weiteren Teil des Abdeckungselements, der keinen Lüftungsraum aufweist, zumindest einen vorgeschnittenen Bereich aufweist, der dazu vorgesehen ist, geöffnet bzw. aufgerissen zu werden.

17. Anbauabdeckung vom Typ Gewächshaus, umfassend:
- ein insbesondere steifes Gerippe und
- zumindest ein biegsames Abdeckungselement (100, 200, 300, 400) nach einem der vorangehenden Ansprüche.

## Claims

1. A flexible cover element (100,200,300,400) for the cultivation of plants, intended to be installed above an area of cultivation (102) and to create a volume of cultivation (104), comprising at least one compartment (112,114,116), called ventilation compartment, formed between:
- a layer (120,140,150), called internal layer, located during use, on the side facing said area of cultivation (102), and comprising ventilation openings (136,146,156) that allow air to pass between said volume of cultivation (104) and said ventilation compartment (112,114,116), and
- a layer (118,120), called external layer, located during use, on the side facing away from said area of cultivation (102), and comprising ventilation openings (138,148,158) that allow air to pass between said ventilation compartment (112,114,116), and the exterior,
**characterised in that** at least one ventilation compartment (112,114,116) is an evacuation compartment (112) for evacuating warm air from the volume of cultivation (104) to the exterior, wherein the at least one ventilation opening (136), a so-called evacuation valve, of the internal layer (120) that forms said evacuation compartment (112) is larger than the at least one ventilation opening (138), a so-called evacuation orifice, of the external layer (118) that forms the evacuation compartment (112).

2. The cover element (100,200,300) according to the preceding claim, **characterised in that** at least one ventilation compartment (112) is divided into at least two cells (126-130) that communicate between each other in a direction perpendicular to the side edges (106,108) of said cover element (100,200,300).

3. The cover element (100,200,300) according to one of the preceding claims, **characterised in that** the evacuation compartment (112) is located on a central part of said cover element (100,200,300) at a distance from the side edges (106,108) such that when in use it is located on an upper part of the cover element (100,200,300).

4. The cover element (100,200,300) according to claims 2 and 3, **characterised in that** the evacuation orifice(s) (138) of the evacuation compartment are arranged solely at the level of a cell (128), called central cell, located during use at the level of a ridge line (110) of said cover element (100,200,300).

5. The cover element (100,200,300) according to one of the preceding claims, **characterised in that** the size of at least one evacuation valve (136) falls between 40 and 60 mm, and/or the size of at least one evacuation orifice (138) falls between 3 and 20 mm.

6. The cover element (100,200,300) according to one of the preceding claims, **characterised in that** at least one evacuation compartment (112) is produced by fixing an additional layer (118) on a layer (120), called principal layer, covering the total volume of cultivation (104) across the width, on an external face of said principal layer (120) with respect to said volume of cultivation (104).

7. The cover element (100,200,400) according to one of the preceding claims, **characterised in that** at least one ventilation compartment is an intake ventilation compartment (114,116) that brings fresh air from outside into the volume of cultivation (104), wherein the at least one ventilation opening (146,156), called intake pore, of the internal layer (140,150) forming said intake compartment (114,116), is smaller than the at least one ventilation opening (148,158), called intake orifice, of the external layer (120) forming said intake compartment (114,116).

8. The cover element (100,200,400) according to the preceding claim, **characterised in that** it comprises an intake compartment (114,116) at the level of at least one side edge (106,108) of said cover element (100,200,400), such that during use it is located on a lower part of said cover element (100,200,400).

9. The cover element (100,200,400) according to one of claims 7 or 8, **characterised in that** the size of at least one intake orifice (148,158) falls between 3 and 20 mm, and/or the size of at least one intake pore (146,156) falls between 0.5 and 15 mm.

10. The cover element (100,200,400) according to one of claims 7 to 9, **characterised in that** at least one intake compartment (114,116) is produced by fixing an additional layer (140,150) on a layer (120), called principal layer, covering the total volume of cultivation (104) across the width, on an inner face of said principal layer (120) with respect to said volume of cultivation (104).

11. The cover element (100,200) according to one of claims 7 to 10, **characterised in that** it comprises:
- an evacuation compartment (112), located on a central part of said cover element (100,200) at a distance from the side edges (106,108), such that when in use it is located on an upper part of the cover element (100,200); and
- an intake compartment (114,116) at the level of at least one side edge (106,108) of said cover element (100,200), such that during use it is located on a lower part of said cover element (100,200).

12. The cover element (100, 200) according to the preceding claim, **characterised in that** it comprises a layer (120) that is common to the evacuation compartment (112) and to the intake compartment(s) (114,116), wherein said common layer (120) forms the inner layer for the evacuation compartment (112) and the outer layer for the intake compartment(s) (114,116).

13. The cover element (100,200,300,400) according to one of the preceding claims, **characterised in that** at least one ventilation compartment (112,114,116) exhibits the shape of an elongated corridor, extending along the length of said cover element (100,200,300,400).

14. The cover element (100,200,300,400) according to one of the preceding claims, **characterised in that** at least one ventilation compartment (112,114,116) is obtained by welding or glueing the external layer (118,120) to the internal layer (120,140,150).

15. The cover element (100,200,300,400) according to one of the preceding claims, **characterised in that** at least one ventilation opening (138,136,148,158,146,156) of a layer (118,120,140,150) is obtained by perforating said layer (118,120,140,150) or by cutting said layer or even by a discontinuous or incomplete bond/weld line.

16. The cover element according to one of the preceding claims, **characterised in that** it additionally comprises at least one openable or removable pre-cut zone on the external layer of a ventilation compartment and/or on another part of said cover element that does not have a ventilation compartment.

17. A greenhouse type shelter for cultivation, comprising:
- a framework, in particular a rigid framework, and
- at least one flexible cover element (100,200,300,400) according to one of the preceding claims.
